# EUROPEAN PATENT APPLICATION

(11) **EP 2 154 790 A1**
(43) Date of publication of application: **17.02.2010**
(21) Application number: 08764019.9
(22) Date of filing: 04.06.2008
(51) Int. Cl.: H04B 3/54, H04J 3/00, H04J 11/00, H04L 12/28, H04L 12/413

(54) **POWER LINE COMMUNICATION DEVICE AND POWER LINE COMMUNICATION METHOD**

(30) Priority: 05.06.2007 JP 2007149503
(71) Applicant: Panasonic Corporation, Kadoma-shi Osaka 571-8501 (JP)
(72) Inventor: MAKI, Masahiro, Osaka 540-6207 (JP)
(74) Representative: Grünecker, Kinkeldey, Stockmair & Schwanhäusser Anwaltssozietät
(86) International application number: PCT/JP2008/001422
(87) International publication number: WO 2008/149550

(57) **Abstract**

A power line communications apparatus is provided which is capable of preventing an increase in unwanted radiation even when signals are continuously transmitted. The power line communications apparatus is a power line communications apparatus 100 for communications via a power line 50. The communications apparatus 100 includes a transmission interval adjustment section 120 for controlling a delivery interval at which PLC signals are delivered onto the power line 50. Also included is an output control section for limiting the output level or the delivery interval of a power line communications signal when the power line communications signal is to be delivered onto the power line 50 based on the delivery interval,

## Description

### Technical Field

The present invention relates to a power line communications apparatus and a power line communications method for performing communications via power lines.

### Background Art

In typical power line communications (PLC), power lines laid in houses are utilized as communication transmission paths for data communications. To perform communications over power lines, power line communications apparatuses (such as household electric appliances or personal computers) for power line communications are connected to each other via power lines.

A communications apparatus as disclosed in Patent Document 1, for example, is known as an example of a power line communications apparatus for communications via power lines. This communications apparatus includes a communications control section, a measurement means, a determination means, and a control means. The communications control section adopts a power line as a transmission path to communicate with a party at the other end of the path through a predetermined communications frequency band. The measurement means measures the transmission path characteristics of the power line. The determination means determines the frequency band used for communications with the power line as the transmission path based on the transmission path characteristics measured. The control means shifts each communications frequency band to the determined frequency band.

[Patent Document 1] JP-A-2006-115165

### Disclosure of the Invention

### Problems to be Solved by the Invention

Power line communications using power lines may be affected by the power lines or unbalanced components such as home-use appliances, switches, and grounds connected to the power lines, resulting in signals being leaked out as unwanted radiation. This is mainly because those balanced mode high-frequency signals, which are output onto a power line as a power line communications signal, are affected by the unbalanced components and thereby converted to unbalanced mode high-frequency signals. This mode conversion is caused by various devices connected to the power line or by the form of wiring, and the level of the conversion is often difficult to predict.

Furthermore, in typical power line communications, a plurality of power line communications apparatuses are connected to the power line so that a plurality of nodes share one line for multiple access. In the case of multiple access, a multiple access scheme such as CSMA scheme or TDMA scheme is adopted to provide control so that each power line communications apparatus will not output signals simultaneously. A larger number of communication nodes present in such multiple access would result in an increase in non-transmission intervals for avoiding congestion, thereby reducing unwanted radiation.

However, a fewer number of communication nodes may be present or quality assurance by QoS (Quality of Service) may allow control for continuous transmission, likely causing a temporary increase in unwanted radiation.

The present invention has been developed in view of the aforementioned situations. It is therefore an object of the invention to provide a power line communications apparatus and a power line communications method which are capable of preventing an increase in unwanted radiation even when signals are continuously transmitted.

### Means for Solving the Problems

In order to achieve the object, a power line communications apparatus according to an aspect of the present invention is a power line communications apparatus for performing communications via a power line, including: a delivery interval control section for controlling a delivery interval at which a power line communications signal is delivered onto the power line, and an output control section for limiting, based on the delivery interval, an output level or the delivery interval of the power line communications signal when the power line communications signal is to be delivered onto the power line.

### Advantageous Effects of the Invention

According to the present invention, unwanted radiation can be reduced even when signals are continuously transmitted. For example, continuous transmissions may be permitted from a small number of communication nodes, potentially causing an increase in unwanted radiation. Even in this case, it is possible to reduce their own signal output level, thereby decreasing the total level of unwanted radiation in the power line communications network.

### Brief Description of the Drawings

Fig. 1 illustrates an exemplary configuration of a power line communications apparatus according to a first embodiment of the present invention;
Fig. 2 illustrates an example of the main operation of a power line communications apparatus according to the first embodiment of the present invention;
Fig. 3 illustrates an exemplary configuration of a power line communications apparatus according to a second embodiment of the present invention;

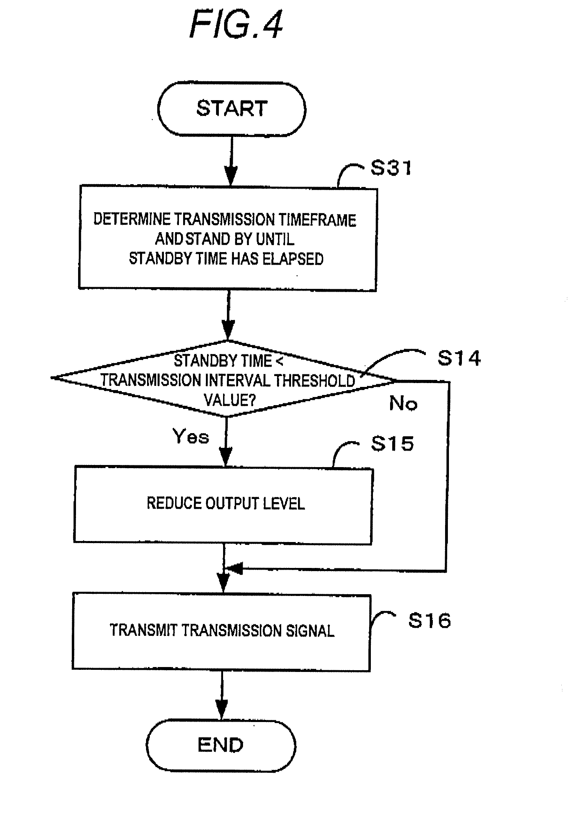

Fig. 4 illustrates an example of the main operation of the power line communications apparatus according to the second embodiment of the present invention;
Fig. 5 illustrates an exemplary configuration of a power line communications apparatus according to a third embodiment of the present invention;
Fig. 6 illustrates an example of a tone map according to the third embodiment of the present invention;
Fig, 7 illustrates an example of the main operation of the power line communications apparatus according to the third embodiment of the present invention;
Fig. 8 is an explanatory view illustrating an example of setting an encoding level for the power line communications apparatus according to the third embodiment of the present invention;
Fig, 9 illustrates an exemplary configuration of a power line communications apparatus according to a fourth embodiment of the present invention; and
Fig, 10 illustrates one main operation of the power line communications apparatus according to the fourth embodiment of the present invention.

### Description of Reference Numerals and Symbols

100, 200, 300, and 400: Power line communications apparatus
50: Power line
110 and 210: Receiver section
120, 220, and 420: Transmission interval adjustment section
130: Output level adjustment section
140: Transmitter section
150: Reception processing section
160: Transmission signal generation section
330: Output adjustment section
370: Tone map generation section
380: Transmission path status determination section

### Best Modes for Carrying Out the Invention

A first power line communications apparatus according to an aspect of the present invention is a power line communications apparatus for performing communications via power lines. The apparatus includes a delivery interval control section for controlling a delivery interval at which a power line communications signal is delivered onto the power line; and an output control section for limiting, based on the delivery interval, the output level of or the delivery interval when the power line communications signal is to be delivered onto the power line.

According to the aforementioned aspect, even when signals are continuously transmitted from the power line communications apparatus, it is possible to limit the signal power per given time of a power line communications signal to be delivered onto the power line, thereby reducing unwanted radiation. On the other hand, a fewer number of communication nodes are present and continuous communications are being provided at reduced delivery intervals. Even in this case, it is possible to impose a limitation to reduce the output level of the power line communications signal, thereby reducing unwanted radiation. Furthermore, depending on the delivery interval, the output level can be continuously controlled, thereby reducing the output level more minutely while decreasing unwanted radiation.

Furthermore, a second power line communications apparatus according to an aspect of the present invention has the following modified aspect from the first power line communications apparatus. That is, the output control section compares the delivery interval with the delivery interval threshold value indicative of a predetermined threshold value related to the delivery interval. When the delivery interval is less than the delivery interval threshold value, the output control section reduces the output level.

According to the aforementioned aspect, even when signals are continuously transmitted, the output is reduced when the delivery interval is equal to or less than a reference value, thereby allowing for reducing unwanted radiation,

Furthermore, a third power line communications apparatus according to an aspect of the present invention has the following modified aspect from either the first or second power line communications apparatus. That is, the power line communications apparatus may adopt the CSMA (Carrier Sense Multiple Access) scheme as an access scheme for communications. In this case, the power line communications apparatus further includes a carrier detection section for carrier detection on the power line, so that the delivery interval control section controls the delivery interval based on a carrier detection result provided by the carrier detection section.

According to the aforementioned aspect, for the CSMA scheme, it is possible to reduce unwanted radiation based on the carrier detection result. For example, if no carrier is detected, continuous transmissions are effected, so that the output level of the power line communications signal can be reduced to thereby decrease unwanted radiation.

Furthermore, a fourth power line communications apparatus according to an aspect of the present invention has the following modified aspect from either the first or second power line communications apparatus. That is, the power line communications apparatus may adopt the TDMA (Time Division Multiple Access) scheme as an access scheme for communications, In this case, the power line communications apparatus further includes a delivery request receiver section for receiving a delivery request to deliver a power line communications signal from another power line communications apparatus connected to the power line, so that the delivery interval control section controls the delivery interval based on the delivery request.

According to the aforementioned aspect, the delivery interval is controlled according to the request to deliver a power line communications signal from another node connected onto the power line. For example, this allows for increasing the delivery interval when another node issues a delivery request, whereas the delivery interval can be decreased when another node has issued no delivery request, thus reducing unwanted radiation in an efficient manner.

Furthermore, a fifth power line communications apparatus according to an aspect of the present invention has the following modified aspect from the third power line communications apparatus. That is, the power line communications apparatus may adopt the OFDM (Orthogonal Frequency Division Multiplexing) scheme as a modulation scheme for communications. In this case, the power line communications apparatus further includes a transmission path status detection section for detecting a transmission path status indicative of a communications status on the power line. Also included is a carrier information storage section for storing carrier information regarding the power line communications signal including the output level and the carrier allocation information concerning each of predetermined frequency bands of the power line communications signal. The output control section reduces the output level based on the transmission path status and the carrier information concerning each of the predetermined frequencies.

According to the aforementioned aspect, output control can be provided to each predetermined frequency band without equally limiting all the frequency bands used for the power line communications. It is thus possible to reduce unwanted radiation efficiently while minimizing decreases in transmission rates and occurrences of transmission errors.

Furthermore, a sixth power line communications apparatus according to an aspect of the present invention has the following modified aspect from the fifth power line communications apparatus. That is, the carrier information storage section stores the carrier information including the output level and the encoding level of the power line communications signal for each of predetermined frequency bands. The output control section reduces the output level of the power line communications signal in the predetermined frequency band and reduces the encoding level of the frequency band whose output level has been reduced.

According to the aforementioned aspect, unwanted radiation can be reduced by decreasing the output level, In addition, the reduced encoding level of the frequency band of a transmission signal can be two-valued, for example, thereby providing improved robustness.

Furthermore, a seventh power line communications apparatus according to an aspect of the present invention has the following modified aspect from any one of the first to sixth power line communications apparatuses. That is, the output control section compares the delivery interval with a delivery interval threshold value indicative of a predetermined threshold value related to the delivery intervals, When the delivery interval is less than the delivery interval threshold value, the output control section makes the delivery interval equal to the delivery interval threshold value.

According to the aforementioned aspect, when the delivery interval is less than a reference value, the delivery interval is increased up to the reference value, thereby making it possible to reduce unwanted radiation when power line communications signals are continuously transmitted.

Furthermore, an eighth power line communications apparatus according to one aspect of the present invention is a power line communications apparatus for performing communications via power lines. The power line communications apparatus includes an output control section. When a right of transmitting a power line communications signal is assigned over a predetermined period, the output control section makes the output level of the power line communications signal delivered onto the power line during the predetermined period less than the output level of the power line communications signal delivered onto the power line during another period.

According to the aforementioned aspect, even when signals are continuously transmitted, unwanted radiation can be reduced.

Furthermore, a first power line communications method according to an aspect of the present invention is a power line communications method for performing communications via power lines. In a power line communications apparatus, the method includes the step of controlling the delivery interval at which the power line communications signal is delivered onto the power line. Also included is the step of limiting the output level or the delivery interval of the power line communications signal when the power line communications signal is delivered onto the power line based on the delivery interval.

According to the aforementioned aspect, even when signals are continuously transmitted, unwanted radiation can be reduced.

Hereinafter, description will be made for a power line communications apparatus and a power line communications method according to embodiments of the present invention with reference to the drawings.

### (First embodiment)

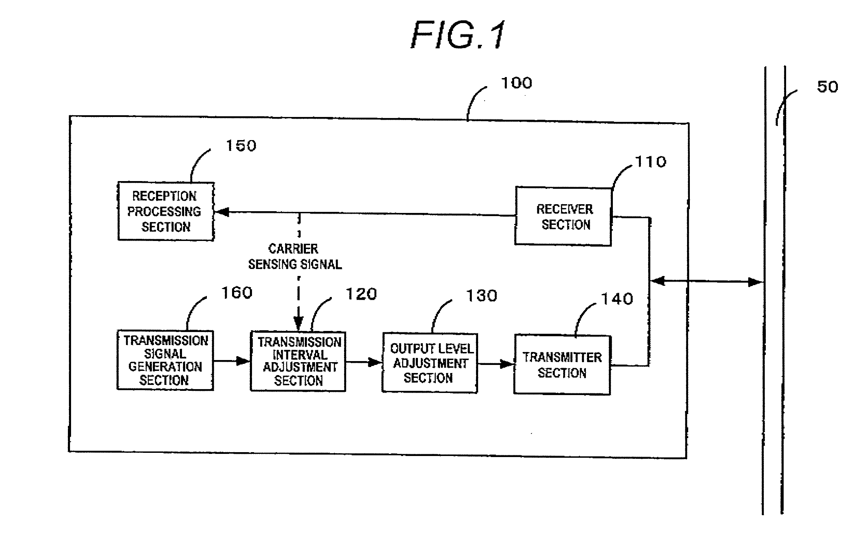

Fig. 1 illustrates an exemplary configuration of a power line communications apparatus 100 according to a first embodiment of the present invention. The power line communications apparatus 100 has a receiver section 110, a transmission interval adjustment section 120, an output level adjustment section 130, a transmitter section 140, a reception processing section 150, and a transmission signal generation section 160.

Examples of the power line communications apparatus 100 include power line communication modems having a modem function, and power line communications devices (such as TVs, telephones, and PCs) equipped with a modem function.

The power line communications apparatus 100 is connected to a power line 50, so that the power line communications apparatus 100 constitutes a power line communications network in conjunction with other power line communications apparatuses via the power line 50. Furthermore, the power line communications apparatus 100 utilizes as a communications scheme the CSMA (Carrier Sense Multiple Access) scheme, one of the multiple access schemes.

In response to a request from the transmitter section 140 to transmit a transmission signal, the receiver section 110 detects (carrier detection) whether there is a carrier transmitted from another power line communications apparatus via the power line 50. When having detected a carrier, the receiver section 110 sends a carrier sensing signal including information concerning the carrier detection time to the transmission interval adjustment section 120. Note that if the detected carrier is a power line communications signal (hereinafter referred to as the PLC signal) directed to the power line communications apparatus 100, then the PLC signal is sent from the receiver section 110 to the reception processing section 150. Note that the receiver section 110 also has a function as "the carrier detection section."

The transmission interval adjustment section 120 monitors whether a standby time has elapsed after the transmitter section 140 issued a transmission request. When the standby time has elapsed, the section 120 sends a transmission signal to the output level adjustment section 130. Furthermore, the transmission interval adjustment section 120 determines the standby time at random as do communication systems that adopt the typical CSMA scheme. Furthermore, the transmission interval adjustment section 120 may also determine the standby time based on the transmission priority of the power line communications apparatus 100 or the communication environments of the power line network to which the power line communications apparatus 100 is connected. Note that since an immediate transmission is possible when no carrier has been detected by the receiver section 110, the standby time is set to "0." Note that the transmission interval adjustment section 120 also has a function as "the delivery interval control section."

The output level adjustment section 130 controls the output level based on the standby time. For example, the output level adjustment section 130 may hold a transmission interval threshold value indicative of a predetermined threshold value related to a transmission interval and the standby time may be greater (longer) than the transmission interval threshold value. In this case, the signal output level of a transmission signal to be transmitted by the transmitter section 140 is made equal to a predetermined level. In the case of the standby time being less (shorter) than the transmission interval threshold value, the signal output level of the transmission signal to be transmitted by the transmitter section 140 is made less than the predetermined level. Note that the output level adjustment section 130 also has a function as "the output control section."

The transmitter section 140 issues a transmission request to deliver a transmission signal onto the power line 50. Furthermore, the transmitter section 140 delivers the transmission signal (PLC signal) onto the power line 50 at transmittable timing, with the output level of the PLC signal having been adjusted.

The reception processing section 150 is made up, e.g., of a receiving circuit to perform various types of processing such as demodulation on the PLC signal.

The transmission signal generation section 160 generates a transmission signal to be delivered onto the power line 50, and then sends the signal to the transmission interval adjustment section 120.

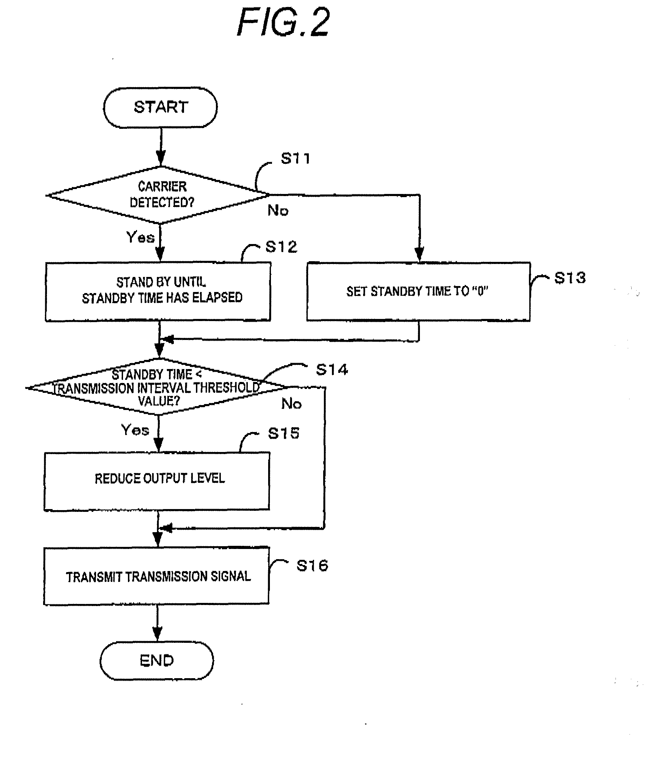

Next, description will be made for the main operation of the power line communications apparatus 100. Fig. 2 illustrates an example of the main operation of the power line communications apparatus 100.

When requested for transmission by the transmitter section 140 of the power line communications apparatus 100, the receiver section 110 performs a carrier detection operation and determines whether a carrier has been detected (step S11).

When a carrier has been detected, the transmission interval adjustment section 120 monitors whether the standby time has elapsed, and if the standby time has elapsed, sends the transmission signal to the output level adjustment section 130 (step S12).

If no carrier is detected, the transmission interval adjustment section 120 sets the standby time to "0," and then immediately sends the transmission signal to the output level adjustment section 130 (step S13).

When the standby time has elapsed, the output level adjustment section 130 determines whether the standby time is less than the transmission interval threshold value (step S14). If the standby time is greater than the transmission interval threshold value, the process proceeds to step S16.

If the standby time is less than the transmission interval threshold value, the output level adjustment section 130 makes an adjustment to reduce the output level of the transmission signal, that is, to make the output level less than the predetermined output level (step S15). More specifically, the signal strength of the transmission signal is reduced.

After the output level has been adjusted as required, the transmitter section 140 transmits the transmission signal (step S16).

Note that as described above, the output level is adjusted after the standby time has elapsed when the output level is to be adjusted, while the output level may be adjusted during the standby time and then the transmission signal may be transmitted after the standby time has elapsed.

According to such a power line communications apparatus 100, when the transmission signal can be continuously transmitted, the signal is transmitted with its output level made less than the predetermined output level. When the transmission signal can be transmitted only intermittently, the signal is transmitted at the predetermined output level with no change made thereto. Being continuously transmittable includes, for example, the cases where the standby time is set to "0" with no carrier detection or where the standby time is less than the given time even with the carrier having been detected. To be capable of transmitting only intermittently means that the standby time is equal to or greater than a given time. Accordingly, when a number of signals are transmitted along the power line 50, one power line communications apparatus transmits signals only intermittently and therefore the output level is not reduced. When a fewer number of signals are transmitted along the power line 50, one power line communications apparatus transmits signals continuously and thus the output level is reduced. When compared with the case where no control is provided to the output level, this makes it possible to provide a reduced total unwanted radiation level in the power line communications network.

Note that as the aforementioned transmission interval threshold value, one or more values can be adopted; when more than one value is available, the output level may be more efficiently adjusted to finer levels for each threshold value. On the other hand, adjustments may also be made by varying the output level continuously according to the standby time without using the transmission interval threshold value. Alternatively, as the standby time for determining the output level, use may be made of the standby time at each cycle or the average of multiple standby times,

### (Second embodiment)

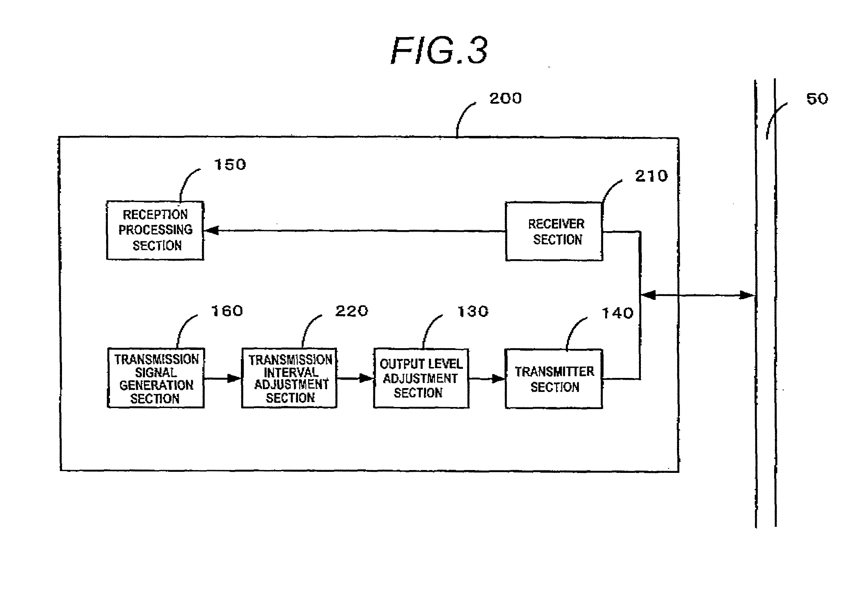

Fig. 3 illustrates an exemplary configuration of a power line communications apparatus 200 according to a second embodiment of the present invention. The power line communications apparatus 200 has a receiver section 210, a transmission interval adjustment section 220, an output level control section 130, a transmitter section 140, a reception processing section 150, and a transmission signal generation section 160. Note that in the power line communications apparatus 200, the components having the same function as those of the power line communications apparatus 100 will be indicated with the same symbols with further descriptions omitted or simplified.

Examples of the power line communications apparatus 200 include power line communication modems having a modem function, and power line communications devices (such as TVs, telephones, and PCs) equipped with a modem function.

The power line communications apparatus 200 is connected to the power line 50, so that the power line communications apparatus 200 constitutes a power line communications network in conjunction with other power line communications apparatuses via the power line 50. Furthermore, the power line communications apparatus 200 utilizes as a communications scheme the TDMA (Time Division Multiple Access) scheme, one of the multiple access schemes

Now, description will be made for the power line communications apparatus 200 which provides control to allocate a transmission timeframe based on the transmission request issued by another power line communications apparatus connected to the power line 50. Or control is also provided to allocate priority (QoS) in order to assign a predetermined period of time as a transmission timeframe regardless of the transmission request. Note that the power line communications network to be described here may be made up of a power line communications apparatus functioning as a master machine with such an allocation control function and a power line communications apparatus functioning as a slave machine without the allocation control function. Alternatively, the network may be constituted only of a power line communications apparatus having such an allocation control function.

The receiver section 210 receives a PLC signal directed to the power line communications apparatus 200. The PLC signal is sent from the receiver section 110 to the reception processing section 150. Furthermore, when the power line communications apparatus 200 functions as a parent machine, the receiver section 210 can receive an access request for transmitting the PLC signal from another power line communications apparatus. Note that the receiver section 210 also has a function as "the delivery request receiver section."

The transmission interval adjustment section 220 determines the transmission timeframe in which the transmission signal is delivered onto the power line 50. The transmission timeframe may be determined in consideration of the transmission request issued by another power line communications apparatus or the transmission request made by the transmitter section 140 or may be assigned a predetermined given timeframe. Note that when the power line communications apparatus 200 functions as a master machine, the transmission timeframe of another power line communications apparatus is also determined. Note that the transmission interval adjustment section 220 also has a function as "the delivery interval control section."

Furthermore, the transmission interval adjustment section 220 monitors whether the standby time has elapsed from the transmission request made by the transmitter section 140 to the transmission timeframe. When the standby time has elapsed, the section 220 sends the transmission signal to the output level adjustment section 130.

Next, description will be made for the main operation of the power line communications apparatus 200, Fig, 4 illustrates an example of the main operation of the power line communications apparatus 200. The same processes as those performed by the power line communications apparatus 100 as shown in Fig. 2 will be indicated with the same symbols with further descriptions omitted or simplified.

First, the transmission interval adjustment section 220 determines the transmission timeframe for delivering the transmission signal onto the power line 50. Then, the transmission interval adjustment section 220 monitors whether the standby time has elapsed from the transmission request made by the transmitter section 140 to the transmission timeframe. When the standby time has elapsed, the transmission interval adjustment section 220 sends the transmission signal to the output level adjustment section 130 (step S21).

After the processing in step S21 has been completed, the power line communications apparatus 200 performs the processing in step S14 to step S16.

According to such a power line communications apparatus 200, the QoS or the allocation control initiated by an access request from the power line communications apparatus may make the apparatus 200 capable of continuously transmitting the PLC signal in a short period of time. In this case, the output level of one signal can be made lower than the predetermined output level, thereby reducing unwanted radiation when compared with the case where no control is provided to the output level.

### (Third embodiment)

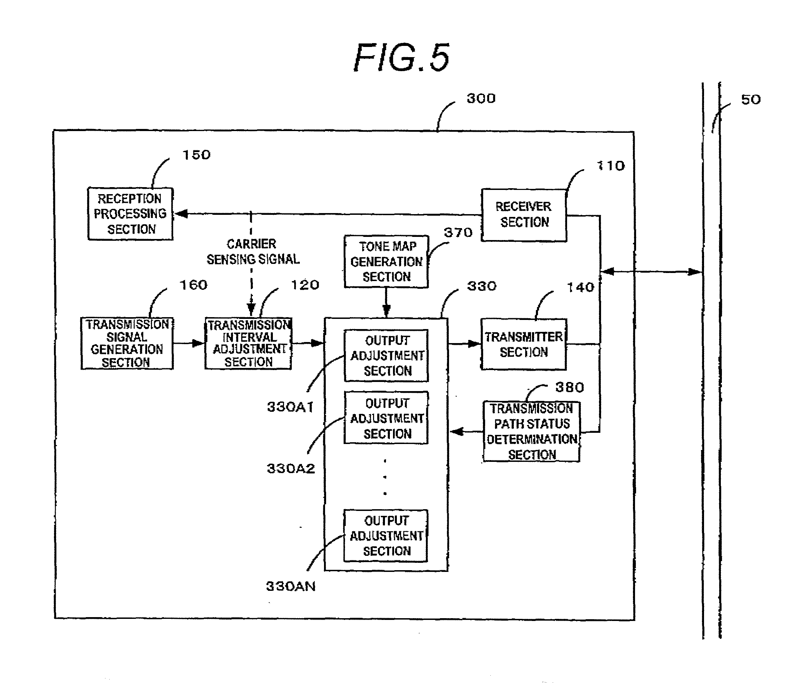

Fig. 5 illustrates an exemplary configuration of a power line communications apparatus 300 according to a third embodiment of the present invention. The power line communications apparatus 300 has a receiver section 110, a delivery interval adjustment section 120, an output adjustment section 330, a transmitter section 140, a reception processing section 150, a transmission signal generation section 160, a tone map generation section 370, and a transmission path status determination section 380. Note that in the power line communications apparatus 300, the components having the same function as those of the power line communications apparatus 100 will be indicated with the same symbols with further descriptions omitted or simplified,

Examples of the power line communications apparatus 300 include power line communication modems having a modem function, and power line communications devices (such as TVs, telephones, and PCs) equipped with a modem function.

The power line communications apparatus 300 is connected to the power line 50, so that the power line communications apparatus 300 constitutes a power line communications network in conjunction with other power line communications apparatuses via the power line 50. Furthermore, the power line communications apparatus 300 utilizes as a communications scheme the CSMA scheme, one of the multiple access schemes, and as a modulation scheme, the OFDM (Orthogonal Frequency Division Multiplexing) scheme.

The output adjustment section 330 has a plurality of output adjustment sections 330A1, 330A2, 330A3,..., and 330AN for adjusting the output level for each of predetermined frequency bands (each carrier or each frequency band including multiple carriers). Since each output adjustment section has the same function, they will be described here simply as the output adjustment section 330. Note that the output adjustment section 330 also has a function as "the output control section,"

Each output adjustment section 330 adjusts the output of a tone map generated by the tone map generation section 370. For example, for each predetermined frequency band, the output level described in the tone map is compared with the output level based on a tone map 370A and the transmission path status determined by the transmission path status determination section 380. When predetermined conditions are satisfied, the output level of the transmission signal is reduced for each frequency band, Furthermore, for example, for each predetermined frequency band, the encoding level of the transmission signal is compared with the encoding level based on the tone map 370A and the transmission path status determined by the transmission path status determination section 380. When the conditions are satisfied, the encoding level of the transmission signal is set for each frequency band.

The tone map generation section 370 generates and stores the tone map 370A for each predetermined frequency. The tone map stipulates the output level of transmission signals, the encoding level, and the modulation scheme that have been specified based on the transmission status of the power line 50 functioning as a transmission path or the status of another apparatus connected to the power line 50 (e.g., an ON status of the power supply of a home-use appliance). Furthermore, even after having once produced the tone map 370A, the tone map generation section 370 can update the tone map 370A, e.g., when there is a change in the status of the power line network. The update processing allows the power line communications apparatus 300 to hold an optimal tone map all the time. Note that the tone map generation section 370 also has a function as "the carrier information storage section."

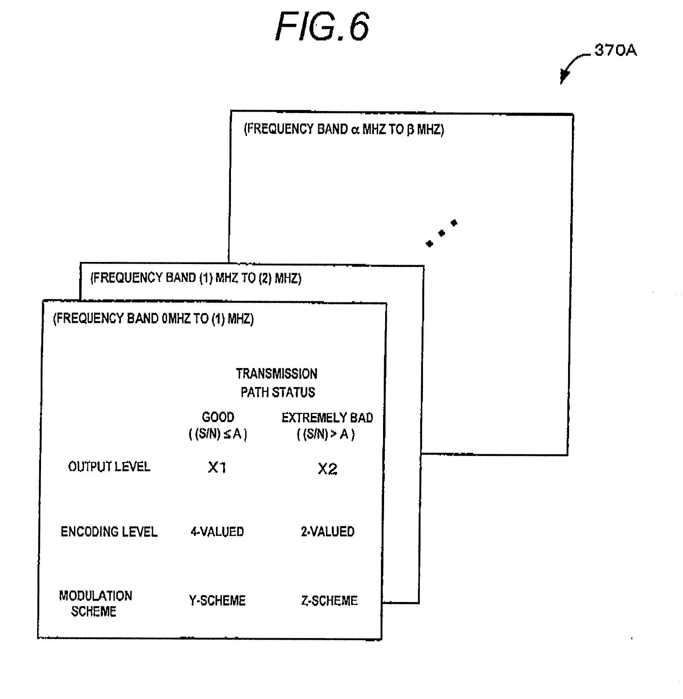

For example, as shown in Fig, 6, the tone map 370A shows the output level of the transmission signal for a good status of the transmission path (e.g., when the S/N is greater than a predetermined value), or the tone map 370A shows the output level for an extremely bad status of the transmission path (e.g., when the SIN is less than the predetermined value A) (e.g., X1 for the good and X2 for the extremely bad with X1 < X2). The tone map 370A also shows the encoding level (e.g., the four-valued for the good and the two-valued for the extremely bad) and the modulation scheme (e.g., Y scheme for the good and Z scheme for the extremely bad). Fig. 6 shows an example of a tone map. Note that the transmission path status has been determined here as classified into two; however, it may also be classified into more than two for determination.

The transmission path status determination section 380 determines the transmission path status of the power line 50 functioning as a transmission path. For example, the transmission path status determination section 380 measures the signal-to-noise ratio (S/N ratio) on the power line 50, thereby determining the transmission path status. Furthermore, the transmission path status determination section 380 periodically determines the transmission path status, thereby allowing the tone map generation section 370 to update the tone map 370 when necessary. Note that the transmission path status determination section 380 also has a function as "the transmission path status detection section."

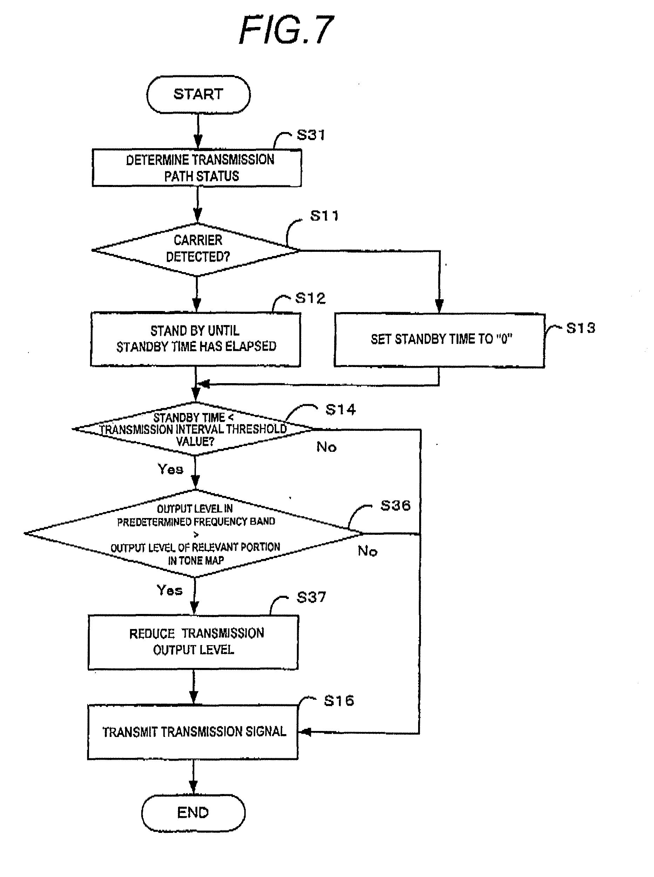

Next, description will be made for the main operation of the power line communications apparatus 300. Fig. 7 illustrates an example of the main operation of the power line communications apparatus 300. The same processes as those performed by the power line communications apparatus 100 as shown in Fig. 2 will be indicated with the same symbols with further descriptions omitted or simplified.

First, the transmission path status determination section 380 determines the transmission path status on the power line 50 (step S31), For example, in Fig. 6, for S/N≤A, the transmission path status is determined to be good, whereas for S/N>A, the transmission path status is determined to be extremely bad.

Then, the apparatus 300 performs the processes in step S11 to step 514.

Note that the processes of steps S11 to S14 may also be performed before the transmission path status is determined.

In step S14, if the standby time is determined to be greater than the transmission interval threshold value, then the output adjustment section 330 sets the output level of each frequency band to the output level described in the tone map 370A, and proceeds to step S16. On the other hand, if the standby time is determined in step S14 to be less than the transmission interval threshold value, then the output adjustment section 330 determines for each frequency band whether the output level of the transmission signal is less than the output level described in the tone map 370A. Here, this determination is made based on the tone map 370A and the determination result of the transmission path status, and the output level of the transmission signal is one accepted when the standby time is less than the transmission interval threshold value (step S36). For example, in Fig. 6, when the transmission path status is good, the process determines whether the output level of the transmission signal accepted when the standby time is less than the transmission interval threshold value is greater than X1, When the transmission path status is extremely bad, the process determines whether the output level of the transmission signal accepted when the standby time is less than the transmission interval threshold value is greater than X2. The output level of the transmission signal accepted when the standby time is less than the transmission interval threshold value may be greater than the output level described in the tone map 370A. In this case, the output adjustment section 330 sets the output level of each frequency band to the output level described in the tone map 370A, and then proceeds to step S16.

The output level of the transmission signal accepted when the standby time is less than the transmission interval threshold value may be less than the output level described in the tone map 370A. In this case, the output adjustment section 330 sets the output level of the transmission signal of the frequency band to a value less than the output level described in the tone map 370A (step S37). More specifically, the signal strength of the transmission signal is reduced,

After the processing at step S37, the power line communications apparatus 300 performs the processing of step S16.

According to such a power line communications apparatus 300, the output level can be adjusted for each frequency band for communications considering the characteristics of the transmission signal and the transmission path status, while efficiently reducing unwanted radiation. For example, it is possible to reduce the output level of a frequency band also used for communications other than power line communications, particularly, to reduce the output of the frequency band. Furthermore, for example, when the output level of a predetermined frequency band is less than a predetermined value, control is provided so that the output level is not reduced any more, thereby assuring the minimum possible output level.

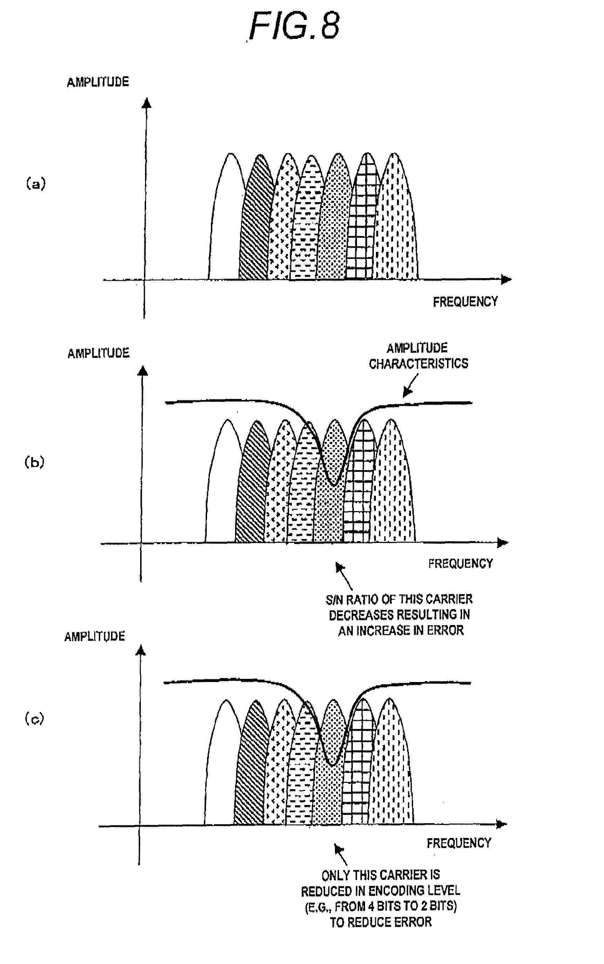

Note that when the output level of the transmission signal is reduced in steps S36 and S37, according to the output level reduction, the processing below can also be performed simultaneously. Fig. 8 is an explanatory view illustrating an example of setting the encoding level for the power line communications apparatus 300.

As shown in (a) of Fig, 8, the power line communications apparatus 300 utilizes the OFDM modulation scheme to transmit the transmission signal with information carried on each subcarrier (each carrier). (a) of Fig. 8 illustrates an example of a subcarrier on the frequency axis of the transmission signal to be transmitted by the power line communications apparatus 300.

As shown in (b) of Fig. 8, the output adjustment section 330 may reduce the output level of the subcarrier of a specific frequency band (here the fifth frequency band from the left). In this case, since this subcarrier will have a reduced S/N ratio, there will be an increase in transmission error if the encoding level is not changed. (b) of Fig. 8 illustrates an example of a subcarrier on the frequency axis of the transmission signal when the power line communications apparatus 300 reduces the output level of a specific frequency band.

In this context, as shown in (c) of Fig. 8, the output adjustment section 330 makes the encoding level of only the subcarrier having been reduced in its output level less than, e.g., an encoding level described in the tone map 370A. For example, even when the encoding level described in the tone map 370A is 4-valued, the transmission signal generation section 160 generates a 2-valued signal. Note that in any other case than when the encoding level is reduced, for example, such a scheme that will cause almost no error may also be specified as a modulation scheme.

This allows for reducing the output level of the transmission signal for each frequency band. In addition, the encoding level of the frequency band having a reduced output level can also be reduced, thereby providing highly robust communications while efficiently reducing unwanted radiation.

### (Fourth embodiment)

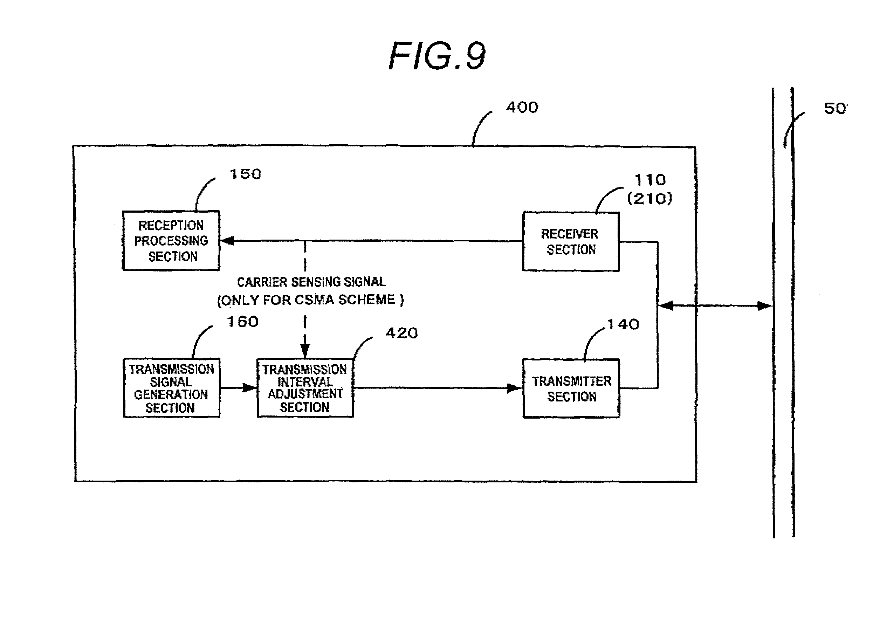

Fig. 9 illustrates an exemplary configuration of a power line communications apparatus 400 according to a fourth embodiment of the present invention. The power line communications apparatus 400 has a receiver section 110 or 210, a transmission interval adjustment section 420, a transmitter section 140, a reception processing section 150, and a transmission signal generation section 160. Note that in the power line communications apparatus 400, the components having the same function as those of the power line communications apparatus 100 or 200 will be indicated with the same symbols with descriptions omitted or simplified.

Examples of the power line communications apparatus 400 include power line communication modems having a modem function, and power line communications devices (such as TVs, telephones, and PCs) equipped with a modem function.

The power line communications apparatus 400 is connected to the power line 50, so that the power line communications apparatus 400 constitutes a power line communications network in conjunction with other power line communications apparatuses via the power line 50. Furthermore, the power line communications apparatus 400 utilizes as a communications scheme the CSMA scheme or TDMA scheme, one of the multiple access schemes.

In addition to the function possessed by the transmission interval adjustment section 120 or 220, the transmission interval adjustment section 420 also holds the transmission interval threshold value indicative of the predetermined threshold value related to the transmission interval. The transmission interval adjustment section 420 re-determines the standby time when the standby time is less than the transmission interval threshold value. More specifically, the standby time is made a value equal to the transmission interval threshold value. Note that the transmission interval adjustment section 420 also has a function as "the output control section for making the delivery interval equal to the delivery interval threshold value."

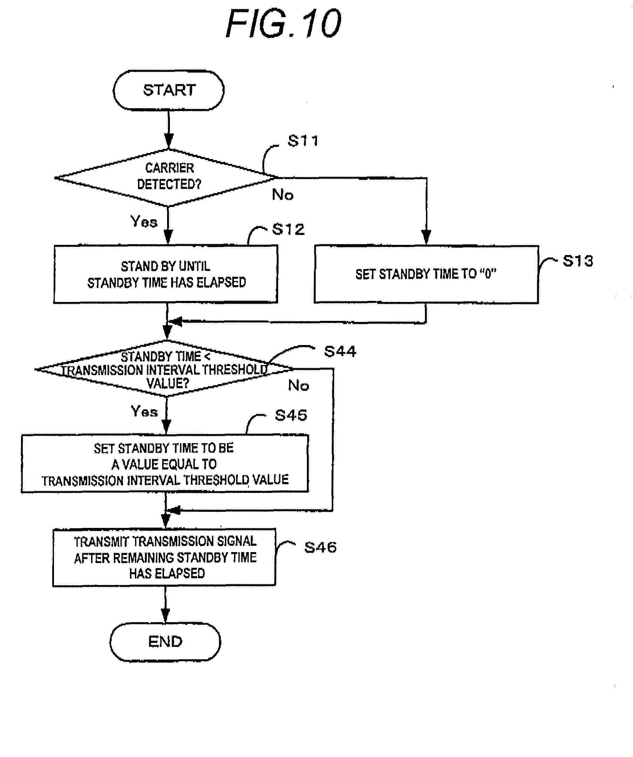

Next, description will be made for the main operation of the power line communications apparatus 400. Fig. 10 illustrates an example of the main operation of the power line communications apparatus 400. The same processes as those performed by the power line communications apparatus 100 as shown in Fig. 2 will be indicated with the same symbols with further descriptions omitted or simplified. Here, description will be made for a case where the CSMA scheme is utilized as a communications scheme.

First, the power line communications apparatus 400 performs the processing in steps S11 to S13.

After the processing in step S13 has been completed, the transmission interval adjustment section 420 determines whether the standby time is less than the transmission interval threshold value (step S44). If the standby time is greater than the transmission interval threshold value, then the process proceeds to step S46.

If the standby time is less than the transmission interval threshold value, the transmission interval adjustment section 420 makes the standby time a value equal to the transmission interval threshold value and then monitors the elapse of the remaining standby time (step S45).

When the remaining standby time has elapsed, the transmitter section 140 transmits the transmission signal (step S46).

According to such a power line communications apparatus 400, no transmission signal is delivered onto the power line 50 at intervals shorter than the given time. Therefore, the average power over a given time would never grow more than expected, thus making it possible to reduce unwanted radiation when compared with the case where the transmission interval is not adjusted.

Note that while such a case has been described with reference to Fig. 10 in which the CSMA scheme is utilized; however, to use the TDMA scheme, the processing in step S21 is first performed and then the processes from step S44 onwards will be carried out.

The present invention has been explained in detail with reference to the particular embodiments. However, it is obvious for those skilled in the art that various variations and modifications can be applied without departing from the spirit and the scope of the present invention.
This application is based upon and claims the benefit of priority of Japanese Patent Application No. 2007-149503 filed on June 5, 2007, the contents of which are incorporated herein by reference in its entirety.

### Industrial Applicability

The present invention is applicable to a power line communications apparatus which is capable of preventing an increase in unwanted radiation even when signals are continuously transmitted.

## Claims

1. A power line communications apparatus for performing communications via a power line, comprising:
a delivery interval control section for controlling a delivery interval at which a power line communications signal is delivered onto the power line, and
an output control section for limiting, based on the delivery interval, an output level or the delivery interval of the power line communications signal when the power line communications signal is to be delivered onto the power line.

2. The power line communications apparatus according to claim 1, wherein
the output control section compares the delivery interval with a delivery interval threshold value indicative of a predetermined threshold value related to the delivery interval, and
when the delivery interval is less than the delivery interval threshold value, the output control section reduces the output level,

3. The power line communications apparatus according to claim 1 or 2, wherein the power line communications apparatus adopts a CSMA (Carrier Sense Multiple Access) scheme as an access scheme for communications,
the power line communications apparatus further comprises a carrier detection section for carrier detection on the power line, and
the delivery interval control section controls the delivery interval based on a carrier detection result provided by the carrier detection section.

4. The power line communications apparatus according to claim 1 or 2, wherein the power line communications apparatus adopts a TDMA (Time Division Multiple Access) scheme as an access scheme for communications,
the power line communications apparatus further comprises a delivery request receiver section for receiving a delivery request to deliver a power line communications signal from another power line communications apparatus connected to the power line, and
the delivery interval control section controls the delivery interval based on the delivery request.

5. The power line communications apparatus according to claim 3, wherein the power line communications apparatus adopts an OFDM (Orthogonal Frequency Division Multiplexing) scheme as a modulation scheme for communications,
the power line communications apparatus further comprises:
a transmission path status detection section for detecting a transmission path status indicative of a communications status on the power line, and
a carrier information storage section for storing carrier information regarding the power line communications signal including an output level and carrier allocation information concerning each of predetermined frequency bands of the power line communications signal, and
the output control section reduces the output level based on the transmission path status and the carrier information concerning each of the predetermined frequencies.

6. The power line communications apparatus according to claim 5, wherein
the carrier information storage section stores the carrier information including an output level and an encoding level of the power line communications signal for each of predetermined frequency bands, and
the output control section reduces the output level of the power line communications signal in a predetermined frequency band and reduces the encoding level of the frequency band whose output level has been reduced.

7. The power line communications apparatus according to any one of claims 1 to 6, wherein the output control section compares the delivery interval with a delivery interval threshold value indicative of a predetermined threshold value related to the delivery interval, and
when the delivery interval is less than the delivery interval threshold value, the output control section makes the delivery interval equal to the delivery interval threshold value.

8. A power line communications apparatus for performing communications via a power line, comprising:
an output control section which, when assigned a right of transmitting a power line communications signal over a predetermined period, makes an output level of the power line communications signal delivered onto the power line during the predetermined period less than an output level of the power line communications signal delivered onto the power line during other periods.

9. A power line communications method for performing communications via a power line, the method comprising, in a power line communications apparatus,
a step of controlling a delivery interval at which a power line communications signal is delivered onto the power line, and
a step of limiting an output level or the delivery interval of the power line communications signal when the power line communications signal is to be delivered onto the power line based on the delivery interval.
